# EUROPEAN PATENT SPECIFICATION

(11) **EP 1 251 704 B1**
(45) Date of publication and mention of the grant of the patent: **11.11.2009**
(21) Application number: 02007494.4
(22) Date of filing: 02.04.2002
(51) Int. Cl.: H04W 72/04

(54) **Wireless communication system, wireless communication unit and method for using a communication resource**
Funkkommunikationssystem,Funkkommunikationsgerät und Verfahren zur Benutzung eines Kommunikationsbetriebsmittels
Appareil et système de communications sans fil, et procédé pour utiliser une ressource de communication

(30) Priority: 18.04.2001 GB 0109539; 18.04.2001 GB 0109538
(43) Date of publication of application: 23.10.2002
(73) Proprietor: MOTOROLA, INC., Schaumburg, IL 60196 (US)
(72) Inventor: Gibbs, Jonathan Alastair, Hedge End, Southampton SO30 2XF (GB); Aftelak, Andrew John, Lychpit, Basingstoke, Hants RG24 8YD (GB); Lucas, Richard Charles, Ash Vale, Hants GU12 5ET (GB); Crisler, Kenneth James, Lake Zurich, Illinois 60047 (US); Wright, Christopher Warren, Tadley, Hampshire RG26 3PJ (GB)
(74) Representative: McCormack, Derek James

(56) References cited:
- WO-A-00/18041
- WO-A-00/64107
- WO-A-98/09459
- US-A- 5 175 866
- US-A- 5 253 253
- US-A- 5 551 062
- US-A- 5 697 059
- US-A- 5 719 868
- PATENT ABSTRACTS OF JAPAN vol. 1996, no. 05, 31 May 1996 (1996-05-31) & JP 08 009447 A (TOSHIBA CORP), 12 January 1996 (1996-01-12)
- KETTERLING H-P: "DIGITALER BETRIEBSFUNK MIT DIIS" FUNKSCHAU, FRANZIS-VERLAG K.G. MUNCHEN, DE, vol. 73, no. 8, 31 March 2000 (2000-03-31), pages 46-50, XP000966555 ISSN: 0016-2841

## Description

### Field of the Invention

This invention relates to a wireless communication system and a wireless communication unit and method for use therein. In particular, the invention is applicable to a method of sharing a communication resource.

### Background of the Invention

Wireless communication systems, for example cellular telephony or private mobile radio (PMR) communication systems, typically provide for radio telecommunication links to be arranged between a plurality of base transceiver stations (BTSs) and a plurality of subscriber units, often termed mobile stations (MSs). In the art, the term mobile station generally includes both hand-portable and vehicular mounted radio units.

Wireless communication systems are distinguished over fixed communication systems, such as the public switched telephone network (PSTN), principally in that mobile stations move between BTS (and/or different service providers) and in doing so encounter varying radio propagation environments.

Methods of simultaneously sharing communication resources in a communication network exist where the resources are shared by a number of users. Such methods are termed multiple access techniques. A number of multiple access techniques exist, whereby a finite communication resource is divided into any number of physical parameters, such as:
(i) frequency division multiple access (FDMA) whereby the total number of frequencies used in the communication system are shared,
(ii) time division multiple access (TDMA) whereby each communication resource, say a frequency used in the communication system, is shared amongst users by dividing the resource into a number of distinct time periods (time-slots, frames, etc.), and
(iii) code division multiple access (CDMA) whereby communication is performed by using all of the respective frequencies, in all of the time periods, and the resource is shared by allocating each communication a particular code, to differentiate desired signals from undesired signals.

Within such multiple access techniques, different duplex (two-way communication) paths are arranged. Such paths can be arranged in a frequency division duplex (FDD) configuration, whereby a frequency is dedicated for uplink communication and a second frequency is dedicated for downlink communication. Alternatively, the paths can be arranged in a time division duplex (TDD) configuration, whereby a time period is dedicated for uplink communication and a second time period is dedicated for downlink communication.

In a wireless communication system, each BTS has associated with it a particular geographical coverage area (or cell). The coverage area is defined by a particular range where the BTS can maintain acceptable communications with MSs operating within its serving cell. Often these cells combine to produce an extensive coverage area.

The communication link from the BTS to a MS is referred to as the down-link. Conversely, the communication link from a MS to the BTS is referred to as the up-link.

A popular version of the PMR system is direct mode radio communication, where MSs communicate directly to each other, without the need for the communication to be passed through a BTS. An enhancement often provided to the basic direct mode communication is in the use of a repeater station to extend the range of the communication link. The repeater station generally performs minimal processing of received signals, typically sufficient processing to correct for any errors introduced in the up-link transmission, before re-transmitting (repeating) the received transmission to the intended recipient in the down-link path.

The present invention finds particular application in the PMR domain of wireless communications. There are distinctive user requirements served by PMR, which are different from those supported by wireless telephony.

One such requirement is effective mobile teamwork. Effective mobile teamwork requires that all members of the team are aware of a situation or activity, applicable to one or more members of the team. Such awareness is provided irrespective of whether an individual is not immediately or directly involved in the situation or activity. This sort of requirement needs the simplicity and immediacy of 'Push To Talk' (PTT) group call communications, as provided by PMR.

Many organisations prefer to have control of their own communication networks. Coverage (particularly in-building) is the most common reason cited as a benefit to owning a private communication system.

The majority of PMR traffic is of a short, sporadic nature making wireless telephony impractical and/or uneconomic for such applications. PMR applications that do not involve emergency calls, or are intended for public safety use, may still have critical response times that have major commercial and financial impact. In addition, private systems lend themselves to being customised so that they can be embedded within the operational procedures of the owning Organisation.

One communication standard that is presently being defined by the European Telecommunications Standards Institute (ETSI) is the Digital Interchange of Information and Signalling standard (DIIS). The focus of the DIIS standard is to enable the transition from the analogue technology prevalent in low-tier Professional Mobile Radio systems to a higher speed (12 kbits/sec in a 12.5kHz (and above) frequency channel spacing) digital technology supporting speech and data.

The fastest growing part of the PMR market is for small simple systems covering a relatively limited coverage area for customers with small radio fleets, for example supporting less than 20 mobile/portable communication units. The intention of the DIIS standard is therefore to provide low cost solutions enabling a range of PMR applications including: speech, transmission of short data messages, telemetry and file transfer.

The type of communication offered by DIIS technology includes:
(i) MS to MS communication (where there is no infrastructure, limited site coverage and single frequency operation is the accepted standard practice);
(ii) BTS to MS (and vice versa) communication, for example a dispatch function for fleet, taxi services, for which semi-duplex communications are generally provided;
(iii) repeater mode of operation (where the communication range is extended by use of a remotely sited repeater or base transceiver station operating on two frequencies as compared to one frequency on an up-link channel and one frequency on a down-link channel); and
(iv) networked repeater mode of operation (whereby multiple site coverage is provided by relayed repeaters or simulcast systems operating on two frequencies as compared to one frequency on an up-link channel and one frequency on a down-link channel).

For MS to MS, and BTS to MS operation, the coverage area (dictated by transmit output power) is usually limited to allow frequency re-use between cells/sites. Across Europe, the majority of small fleet communication links only operate on a single channel. Indeed, many of these single channels have to be shared with other users in the same geographic area. As such, many spectrum licenses are offered for shared frequency operation, and DIIS equipment will also be required to co-exist in current PMR spectrum including both shared and exclusive channel assignments.

In DIIS it is also likely that at least part of the spectral allocation will be for unlicensed and/or unplanned use; similar to the Digital European Cordless Telephony (DECT) standard previously developed and defined by the European Telecommunication Standards Institute (ETSI). In such a regime, it is likely that it will be necessary for base transceiver stations (BTSs)/ repeaters to share channels in order to make efficient use of the spectrum without compromising battery-life in portable equipment and to achieve this automatically without pre-configuration.

In DIIS as in other FDMA protocols, the problem of optimal spectrum utilisation is made worse by the fact that in the interests of both battery life and minimising complexity, only one frequency can be monitored at any one time and only one communication channel can be supported on this single frequency.

In summary, there exists a need in the field of wireless communication systems, and in particular in PMR communication systems involving a small number of MSs, for a communication system, a communication unit and method of using a communication resource to allow BTSs to better share a given communication resource in an improved manner.

WO-A-00/18041 describes a system and a method for distributed trunking in a communication network. Any node desiring to communicate data to another node has to monitor a control channel and thereby has to select a data channel which appears to be free. The node announces its intention to use the selected data channel on the control channel.

WO-A-00/64107 describes a method of sharing bandwidth within a common wireless communication channel between a number of subnets a bandwidth. A network master controller controls the sharing operations.

### Summary of the Invention

According to the present invention in a first aspect there is provided a self-organising wireless communication system as defined in claim 1 of the accompanying claims.

Each of the wireless serving communication units may each include a receiver. The receiver of one serving unit may receive the presence message portion transmitted in a wireless transmission message by least two other of the plurality of serving communication units, said receiver being operably coupled to a processor for processing said received presence messages to determine which of the other wireless serving communication units transmitted said presence message The receiver may have synchronising means to synchronise said receiver to receive the wireless transmission message.

The wireless transmission message of the transmitter of each serving unit may be transmitted in a periodic cycle, said at least one serving unit also listening initially to a full cycle of wireless transmission messages from other serving units before transmitting its own presence message herein also referred to as a 'yoohoo' message. The transmitter may include means to select a portion of said cycle to transmit its respective wireless transmission message including its yoohoo message.

The communication system according to the first aspect of the invention may communicate using a wireless transmission message which includes a listening period for use by any one of the plurality of wireless serving communication units to instruct the other wireless serving communication units to leave the communication resource so that a communication can take place.

Each serving unit in a set of serving units may operate in a similar manner. Each serving unit of the set conveniently scans all available communication resources upon start-up. Preferably each serving unit is operable so as to organise and record said available communication resources into a ranked list according to a measured noise or interference level. The wireless transmission message issued upon transmission by each serving unit beneficially includes a bitmap indication of wireless transmissions from other serving units that can be successfully received by the respective at least one other serving unit. The bitmap indication message preferably indicates an available time period or slot for transmission of the respective at least one wireless serving communication unit's yoohoo message. The bitmap message of other wireless serving units is preferably monitored by each serving unit to establish if the wireless transmission message of that serving unit has been successfully received by said other serving units.

If one of the serving units determines that its wireless transmission message has not been successfully received by all other serving units, that unit may be programmed to operate, by a controller device incorporated within the unit, a majority vote procedure to assess whether sufficient wireless serving communication units have successfully received the wireless transmission message.

The wireless transmission message issued by each of the serving units preferably includes a list of at least one alternative frequency or channel that the respective at least one wireless serving communication unit will move to when the channel or frequency used by that unit ceases to be available for use, e.g. is taken for a call by any of the other wireless serving communication unit. The message issued may indicate a single favourite frequency or channel and/or a cyclically transmitted list of secondary frequencies and/or channel. The at least one alternative frequency or channel can be defined using an absolute addressing scheme or a relative addressing scheme.

Each serving unit may conveniently perform a check as to whether other serving units are specifying one of the same alternative channels or frequencies and if they are may adjust its ranked list of alternative numbers.

Each serving unit may include in the wireless transmission message that it issues, a signal indicating to other serving units unit to vacate the current channel or frequency so that a call can take place on said current channel or frequency.

According to the present invention in a second aspect there is provided a method of sharing a communication , the method being as defined in claim 18 of the accompanying claims.

In the method according to the second aspect, the wireless transmission message comprising the presence message is conveniently transmitted in a periodic cycle, and the method may be further characterised by the steps of:
listening, by said at least one wireless serving communication unit, to a full cycle of wireless transmission message ; and
transmitting its own wireless transmission message including a yoohoo portion in an available communication resource.

The wireless transmission message in the method according to the second aspect of the invention may include the features of the system according to the first aspect earlier, including amongst other things provision of a listening period, and an instruction to other wireless serving communication units in the listening period to leave the communication resource so that a communication can take place.

The method according to the second aspect of the invention may also include the step, as in the operation of the system according to the first aspect, of the at least one serving unit organising recording and transmitting, in the manner described earlier, portions of said communication resource that are available to use into a ranked list according to a measured noise or interference level. The indicating step may as in the method according to the first aspect indicate an available time period or slot for transmission of the respective at least one wireless serving communication unit's yoohoo message and a bitmap as described earlier.

The method according to the second aspect may further include determining whether a communication unit has successfully accessed a wireless communication system, the method comprising the steps of:
transmitting a first wireless transmission message including at least a yoohoo message portion;
receiving a plurality of similar wireless transmission messages transmitted by other communication units that contain their respective yoohoo message portions; and
processing the received yoohoo message portions of said similar transmission messages wherein said yoohoo message indicates which other communication units received said first wireless transmission message. The method may operate using the features described earlier for the system according to the first aspect.

According to the present invention in a third aspect there is provided a wireless communication unit as defined in claim 19 of the accompanying claims. The unit may be a base transceiver station.

In the system, method and unit according to the invention as defined earlier, communication may be in digital form and according to a FDMA communication protocol. The protocol may be in accordance with DIIS as defined earlier. Communication may be in a time division duplex (TDD) manner.

The present invention beneficially provides a simple way of allowing serving units such as base transceiver stations to share resources such as channels or frequencies whilst no activity, e.g. communication of speech, is taking place. The invention allows efficient use of the communication spectrum available to be obtained in a manner which does not compromise battery life in portable equipment and to achieve channel or frequency sharing in an automatic manner without special hardware pre-configuration (other than programming of additional functions into known components within a hardware unit). Further unexpected advantages of the invention are described later.

Embodiments of the present invention will now be described by way of example with reference to the accompanying drawings, in which:

### Brief description of the drawings

FIGURE 1 shows a block diagram of a radio communication system adapted to support the various inventive concepts of a preferred embodiment of the present invention;
FIGURE 2 shows a block diagram of a communication unit adapted to support the inventive concepts of the preferred embodiments of the present invention;
FIGURE 3 shows a timing diagram of a BTS's 'yoohoo' cycle with associated bit-map of a 'yoohoo'ing unit adapted to support the inventive concepts of the preferred embodiments of the present invention;
FIGURE 4 shows a timing diagram of a BTS's 'yoohoo' cycle with an associated bit-map of a 'yoohoo'ing unit following a successful entry by a BTS in FIG. 3, in accordance with a preferred embodiment of the present invention;
FIGURE 5 shows a timing diagram of a BTS's 'yoohoo' cycle with associated bit-map of a 'yoohoo'ing unit following an unsuccessful entry by two BTSs in FIG. 3, in accordance with a preferred embodiment of the present invention;
FIGURE 6 shows a timing format of an alternate frequencies part of the BTS's 'yoohoo' message in accordance with a preferred embodiment of the present invention; and
FIGURE 7 shows a flowchart of a self-organising channel allocation procedure of a BTS in accordance with a preferred embodiment of the present invention.

### Description of Preferred Embodiments

A preferred embodiment of the invention will now be described with reference to a PMR communication system, operating using a FDMA protocol such as such as DIIS, although the inventive concepts contained herein can be readily extended to other access protocols and wireless communication system technologies.

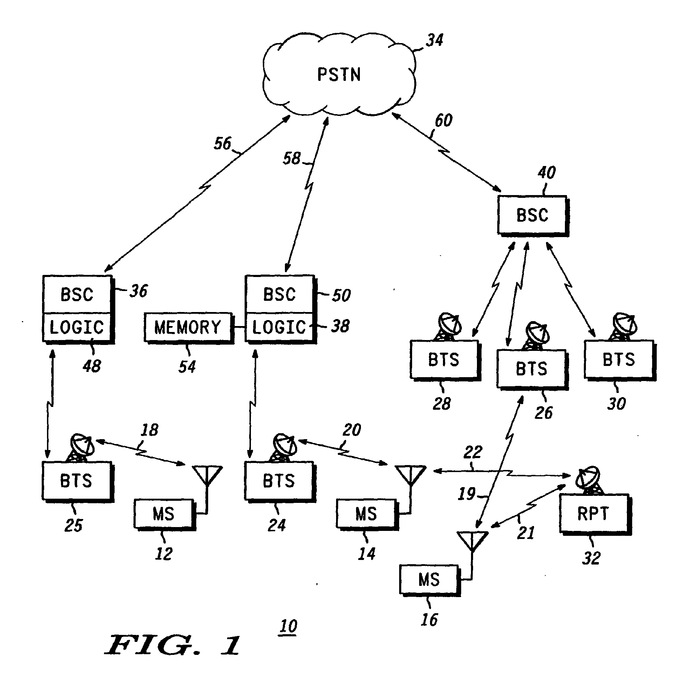

FIGURE 1 shows, in outline, a radio communication network 10, adapted to operate in accordance with a preferred embodiment of the invention.

A plurality of subscriber units, such as a mixture of MSs 12-16 and fixed terminals (not shown), communicate 18-22 over a DIIS air-interface. The MSs are shown with a variety of communication options. They can communicate 18-20 via at least one of a plurality of base transceiver stations (BTSs) 24-30 with other MSs.

If the communication system offers telephone interconnect, the MSs can communicate 56-60 with fixed or cellular telephones via a conventional public switched telephone network (PSTN) 34. Alternatively the MSs can communicate via a simple repeater station, such as MS 16 communicating 21, 22 with MS 14 via repeater station 32.

Each BTS 24-30 or repeater 32 is principally designed to serve its primary cell, with each BTS 24-30 or repeater station 32 containing one or more transceivers. The BTSs 24-30 may be connected to the PSTN 34 through base station controllers (BSCs) 36-40.

The embodiment of the invention is described with reference to smaller PMR systems such as DIIS. However, if the inventive concepts described herein were applied to larger wireless communication systems, such PSTN traffic may also pass through mobile switching centres (not shown) that may be interconnected by an operations and management centre (OMC) that would administer general control of the wireless communication system (not shown).

Each BSC 36-40 may control one or more BTSs 24-32, with BSCs responsible for establishing and maintaining both control channel(s) and traffic channel(s) to serviceable MSs affiliated therewith, as will be understood by those skilled in the art.

The various system elements, such as BSCs 36-38, will include control logic 48, 50, with the various system elements usually having associated memory 54 (shown only in relation to BSC 38 for the sake of clarity). The memory typically stores historically compiled operational data as well as in-call data, system information and control algorithms.

For an unlicensed/unplanned system to function effectively over several frequencies, with a minimum of hardware assigned to a BTS and minimal scanning required by a MS, it is necessary for a fleet of MSs to be aware at any time on which frequency its serving BTS is operating.

In a preferred embodiment of the invention, at least one of the BTSs 24-30 has been adapted to transmit a specific new information message over the air-interface, hereinafter referred to as a 'yoohoo' message. This is a fixed message sent by a BTS identifying its presence on a given channel. Any MSs wishing to communicate on a channel must receive and respond to their respective BTS's 'yoohoo' message.

It is within the contemplation of the invention that alternative radio communication architectures could benefit from the inventive concepts described herein.

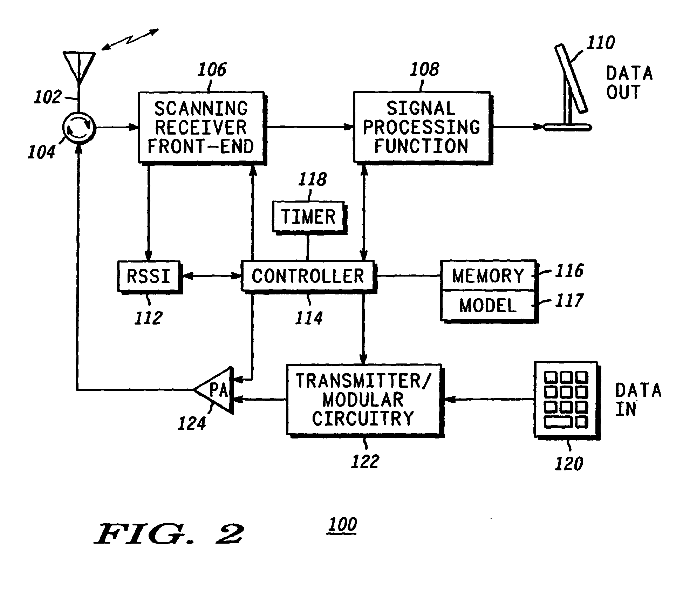

Turning now to FIGURE 2, there is shown a block diagram of a communication unit 100 adapted to support the inventive concepts of the preferred embodiments of the present invention. The communication unit may be either a BTS or a MS. The communication unit 100 contains an antenna 102 preferably coupled to a duplex filter or circulator 104 (in the BTS case, whereas a MS will likely not require a circulator in DIIS) that provides isolation between receive and transmit chains within the communication unit 100.

The receiver chain includes scanning receiver front-end circuitry 106 (effectively providing reception, filtering and intermediate or base-band frequency conversion). The scanning front-end circuitry can still be used to perform foreground scanning, if desired, when the communication unit is not participating in a communication. The scanning front-end circuit is serially coupled to a signal processing function 108.

An output from the signal processing function is provided to a suitable output device 110, such as a speaker or visual display unit (VDU).

The receiver chain also includes received signal strength indicator (RSSI) circuitry 112 (shown coupled to the scanning receiver front-end 106, although the RSSI circuitry 112 could be located elsewhere within the receiver chain). The RSSI circuitry is coupled to a controller 114 for maintaining overall subscriber unit control. The controller 114 is also coupled to the scanning receiver front-end circuitry 106 and the signal processing function 108 (generally realised by a DSP).

The controller 114 may therefore receive bit error rate (HER) or frame error rate (FER) data from recovered information. The controller is also coupled to a memory device 116 that stores operating regimes, such as decoding/encoding functions and the like, and data relating to a monitored list of suitable neighbouring cell sites. A timer 118 is typically coupled to the controller 114 to control the timing of operations (transmission or reception of time-dependent signals) within the communication unit.

As regards the transmit chain, this essentially includes an input device 120, such as a transducer or other man-machine interface (for example a keypad), coupled in series through transmitter/modulation circuitry 122 and a power amplifier 124. The transmitter/modulation circuitry 122 and the power amplifier 124 are operationally responsive to the controller, with an output from the power amplifier coupled to the duplex filter or circulator 104 (in the BTS case).

Of course, the various components within the communication unit 100 can be realised in discrete or integrated component form, with an ultimate structure therefore being merely an arbitrary selection. Furthermore, a substantially similar circuit arrangement is found in each of the associated BTSs.

The signal processing function 108 has been adapted in the present invention to enable a MS, wishing to communicate on a channel, to be able to receive and respond to its respective serving BTS's 'yoohoo' message, as will be described later.

It is within the contemplation of the invention that the preferred use of processing the 'yoohoo' message can be implemented in software, firmware or hardware, with the function being implemented in a software processor (or indeed a digital signal processor (DSP)), merely a preferred option.

In order to achieve good spectral utilisation, it is very likely that at any one time, several 'yoohoo'ing BTSs 24-30 will be present on a given channel. Therefore, another aspect of the present invention addresses the organisation of BTS 'yoohoo' transmissions in order to achieve a more optimal spectrum utilisation.

In the preferred embodiment of the invention a BTS 24-30 scans all available frequencies when it is initially switched on. Available frequencies (or available time-slots/channels within such frequencies) are short-listed and then ranked in descending order - according to their noise/ interference level. The noise/ interference levels are determined by the RSSI circuitry 112 coupled to the scanning receiver front-end 106, in the BTS. The controller 114 preferably assesses the noise/interference level by determining a receive bit error rate (BER) or frame error rate (FER) from the received data.

The available (free) channels, namely channels without traffic but containing other BTS 'yoohoo' signals, are then short listed and jointly ranked according to the number of BTSs transmitting a 'yoohoo' message and their respective noise/interference levels. The BTS then selects the best channel and begins to 'yoohoo' to its fleet of MSs.

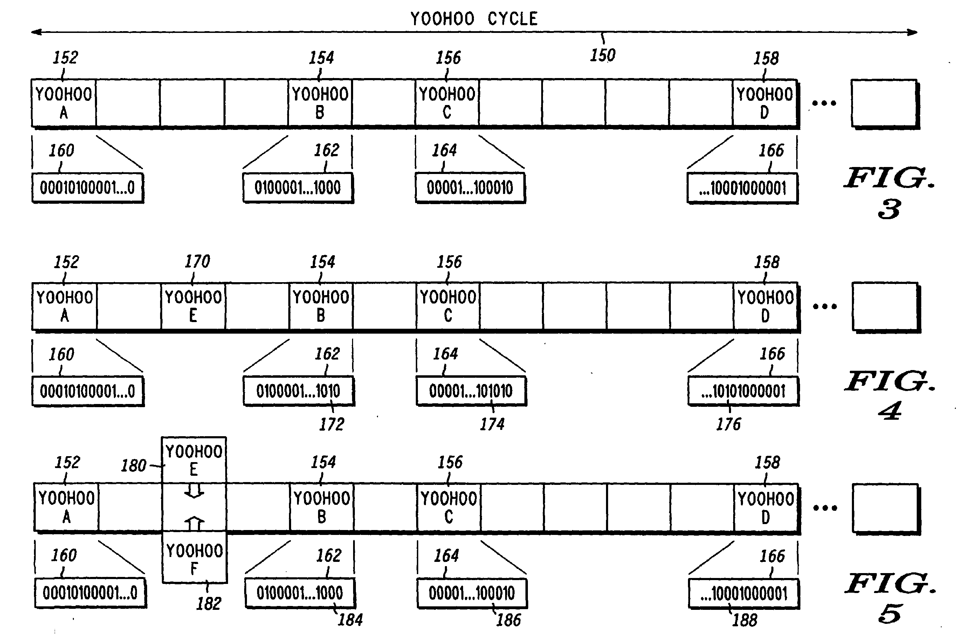

Turning now to FIG. 3, a timing diagram of a BTS's 'yoohoo' cycle, in accordance with a preferred embodiment of the invention, is shown. In order to transmit a 'yoohoo' message to a group of MSs 12-16, the BTS 24-30 must synchronise to any existing BTS that are also transmitting a 'yoohoo' message.

A BTS performs this by listening to all 'yoohoo' transmissions within a 'yoohoo' cycle 150. The 'yoohoo' cycle comprises a generally repetitive series of 'yoohoo' messages wherein each message occupies a single timeslot of the 'yoohoo' cycle. The 'yoohoo' cycle defines a maximum number of BTSs, Yₘₐₓ, which may reside on a given channel/ frequency. It is envisaged that within a DIIS wireless communication system that the maximum number of BTSs residing on a given channel/frequency will be approximately 10-20 communication units.

To allow the system to perform such self-organisation, each 'yoohoo' message includes a 'map' (bitmap) 160-166 of other BTS 'yoohoo' messages that can be heard by that BTS (Yₘₐₓ-1 bits within the 'yoohoo' message). The map 160-166 is arranged so that the first 'yoohoo' opportunity, following the current 'yoohoo' message is the first bit of the map. For example 'yoohoo' message B 154 transmits a bit map '0100001 ...', indicating that it can hear 'yoohoo' messages being transmitted in the second and seventh periods of time following its 'yoohoo' transmission.

FIG. 3 shows that these second and seventh subsequent periods of time correspond to 'yoohoo C' 156 and 'yoohoo D' 158 transmissions. By observing a complete cycle of the 'yoohoo' frame 150 and logical 'Or'ing the bit-maps (correctly aligned) from each 'yoohoo' message that is heard, a BTS can establish how many of the 'yoohoo' slots are free.

If the BTS desires it can then begin its own transmission of a 'yoohoo' message in a time period (or time slot) that will not interfere with any of the existing 'yoohoo' transmissions. Such a BTS's 'yoohoo' transmission is shown in FIG. 4.

FIG. 4 shows a timing diagram of a BTS's 'yoohoo' Cycle with an associated bit-map of a 'yoohoo' message following a successful entry by a BTS. One of the BTSs has monitored the complete cycle of 'yoohoo' transmissions in the 'yoohoo' frame 150 and determined, based on the bit pattern of each received 'yoohoo' message, that a time period/slot is available for transmission of its 'yoohoo E' message 170.

The maps of other BTSs are then monitored in order to establish if their respective 'yoohoo' messages indicate that that respective BTS has successfully received its 'yoohoo E' message 170. The BTS transmitting the 'yoohoo E' message 170 may then determine that no collision has occurred with other BTSs accessing the system. The successful receipt of this new 'yoohoo' message is highlighted by a change in the bits 172-176 of bitmap patterns 162-166 transmitted in respective 'yoohoo' messages 'B', 'C' and 'D'.

FIG. 5 shows a timing diagram of a BTS's 'yoohoo' cycle, with an associated bit-map, highlighting an unsuccessful attempt to access the system by two BTSs. Two BTSs have monitored a full cycle of 'yoohoo' transmissions in a 'yoohoo' frame 150, and both selected the same time period/slot in which to attempt to access the system - as shown by 'yoohoo E' message 180 and 'yoohoo F' message 182.

These two transmissions will interfere with each other, thereby preventing the other BTSs that are transmitting 'yoohoo' messages, from successfully receiving a 'yoohoo' message. Consequently, the other BTS fail to acknowledge the presence of a 'yoohoo' transmission in that particular time period/slot, as shown by bits 184-188 in bitmaps 162-166. Typically, the 'yoohoo' transmission will include an error detection code, such as a cyclic redundancy check (CRC), that would permit a receiving BTS to reject the message resulting from any collision.

In the event of the BTSs 'yoohoo' message not being successfully received by other BTSs, the BTS attempting to access the system may then try another 'yoohoo' slot. Such a re-try is necessary in response to the lack of acknowledgement from other BTS 'yoohoo' transmissions. Such a lack of acknowledgement indicates that a collision is likely to have occurred. The choice of which other period of time/slot to choose is preferably made in accordance with well-established random access principles, as known to those skilled in the art.

The ideal scenario pictured in FIG. 3 assumes that all BTSs can be heard by other BTSs. In practice, this is unlikely to be the case, as some BTSs may be out of 'coverage' range from other BTSs. In this case a majority vote mechanism may be applied for random access checking rather than expecting all BTSs to hear an attempt.

The application of a majority voting mechanism for random access checking is preferably applied as follows. Each of the 'yoohoo' messages transmitted by a BTS identifies the other 'yoohoo' messages that may be heard by that respective BTS, using a cyclic binary bit-map (as shown in FIG's 3-5). When a BTS begins to transmit a 'yoohoo' message at a given position in the cycle, it can establish which other BTSs within the cycle have heard a transmission in that slot (their relevant bits will go to a logic "1" as in FIG. 4).

If a certain proportion of the 'yoohoo' messages indicate a successful reception of the new 'yoohoo' message, for example 60% or more of 'yoohoo' messages, then the random access will be deemed to have been successful. This effectively resolves the situation where competing BTS attempt to transmit 'yoohoo' messages in the same position within the cycle, since mutual interference will result in many of the BTSs failing to hear either of the two transmissions (see FIG. 5).

In the event that only one or two BTSs are transmitting a 'yoohoo' message on a channel when a BTS attempts to enter the cycle, a BTS may continue to transmit its 'yoohoo' messages assuming that it has not suffered such a collision. In this case, assuming that the entry point within the cycle is randomised, it is quite unlikely, even if the other 'yoohoo' messages fail to indicate its presence, that the random access attempt has failed.

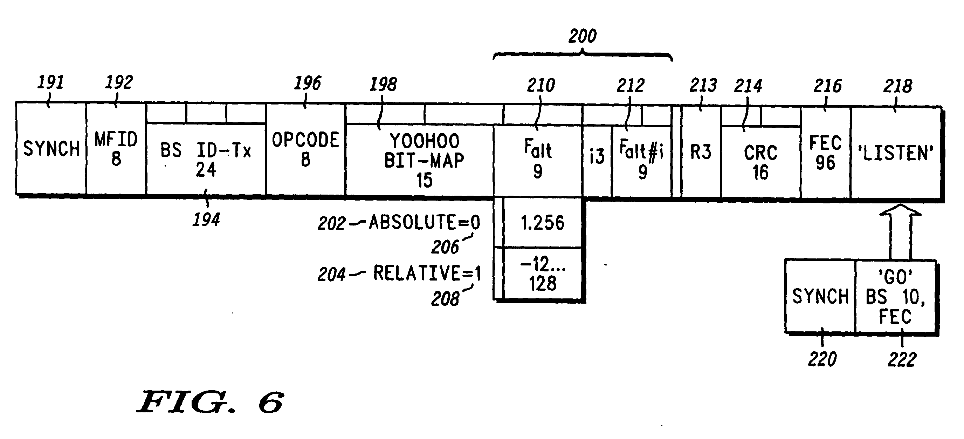

An actual communication (call) 18-22 between a MS and a BTS, e.g. to deliver speech information, will necessarily occupy the entire frequency. When a call is set-up by one of the BTSs transmitting a 'yoohoo' message, or a MS belonging to such a BTS, the remaining BTSs that were transmitting 'yoohoo' messages have to move to other frequencies and re-commence transmitting their 'yoohoo' messages there. A preferred arrangement for re-directing such BTSs to other frequencies/channels is shown in FIG. 6.

FIG. 6 shows a timing format of a BTS 'yoohoo' message 190 in accordance with a preferred embodiment of the present invention. In the preferred embodiment of the invention each 'yoohoo' message 190 comprises at least three parts:
(i) a synchronisation sequence 191;
(ii) the communication message itself; and
(iii) a listening period 218 to allow MSs within the fleet or other BTSs to communicate with that particular BTS.

The synchronisation sequence 191 allows carrier and symbol synchronisation to be achieved by listening receivers. This may also allow channel sounding where coherent communications or an equaliser is involved.

The 'yoohoo' message itself preferably includes information detailing:
a) an identity of the BTS 194 and fleet 192;
b) a map indicating successfully received 'yoohoo' transmissions from other BTSs 198, as described with reference to FIGURES 3-5;
c) a list of alternative frequencies or channels 200 for the serving BTS to move to in the situation where the current channel/frequency is taken and the serving BTS is forced to move; and
d) an indication that the BTS is waiting and not in a communication 213.

A method, for use in conjunction with the present invention, of directing communicating units to utilise a specified communication resource such as a specified frequency or channel includes the step of informing a receiving communication unit, on a first channel or frequency, of at least one alternative channel or frequency (200) that is to be used for a communication if the first channel or frequency is used for a call. The at least one alternative frequency or channel (200) includes a single favourite frequency or channel (210) and a cyclically transmitted list of secondary frequencies or channels (212).

The alternative frequency message 200 indicates a list of alternative frequencies or channels that the BTS will move to when the current 'yoohoo'ing channel becomes busy/is taken. The list preferably comprises a single favourite Fₐₗₜ 210 and a cyclically transmitted list of M secondary frequencies 212, say Fₐₗₜ#2 to Fₐₗₜ#9.

The cyclically transmitted list of M secondary frequencies 212, say Fₐₗₜ#2 to Fₐₗₜ#9 may take any number of forms, but in the preferred embodiment of the invention, the BTS will cyclically specify the next frequency in the list of preferred secondary frequencies on each transmission cycle. It is within the contemplation of the invention that any number of other arrangements can be used to indicate the secondary frequencies or channels to use.

Frequencies are defined in one of two ways:
(i) using absolute addressing 202 of channels numbered from 1 to 2^{N} (say, 1 to 256) or
(ii) relative addressing 204 (based upon the current frequency in-use) from -2^{N-1} +1 to 2^{N-1} (say, -127 to +128);
where N = the number of bits available to indicate the address of the alternate channel/frequency.

The selection of which addressing mechanism to use is primarily dependent upon the size of the spectrum allocation, with the example shown in FIG. 6 providing 2^{N}-1 = '255' (where N=8) alternate frequencies. The first bit may be allocated to indicate which of the absolute or alternate addressing modes are to be used. For example, a first bit='0' 206 would indicate a subsequent absolute address 202 and a first bit='1' 208 would indicate a subsequent relative address 204.

A number of BTSs transmitting a 'yoohoo' message on a channel will each send out a different list of alternate frequencies. However, it is possible that without some form of coordination, too many BTSs will converge on the same channel in the event of a call commencing on the current 'yoohoo' channel. Therefore, preferably, the BTSs continuously perform a check that no more than probably two other BTSs are transmitting 'yoohoo' messages with the same preferred frequency Fₐₗₜ as themselves.

In the preferred embodiment of the present invention, a threshold, of say 2, is set, and if there are more than two BTSs indicating the same Fₐₗₜ, then a BTS will revert to one of its secondary backup frequencies. The preferred secondary backup frequency 212 is that which is least indicated as Fₐₗₜ or as a backup frequency by other 'yoohoo' messages. It is worth noting that as soon as one BTS changes its Fₐₗₜ, other BTSs must recognise this and react to the change (i.e. not follow the Fₐₗₜ change themselves). In this manner, the system should resolve itself into a steady, optimised state.

A BTS that is transmitting 'yoohoo' messages must maintain a record of which Fₐₗₜs have been transmitted by another BTS, and in what order, on the current frequency. This will ensure that its fleet will be best able to follow it, should the BTS need to change frequency. This list forms an initial ordered scan-list for the MS fleet when the BTS leaves the current frequency/channel. Hence, maintaining an up to date list is essential for call set-up times to be kept to a minimum.

Such a technique advantageously allows a BTS 24-30, or repeater 32, to indicate to a fleet of associated MSs, a set of frequencies that will be used in the event that the current 'yoohoo' frequency or channel ceases to remain available. This is achieved, in part, through the use of a prioritised list of channels that are absolutely 202 or differentially 204 addressed. In addition BTSs coordinate their prioritised list to minimise the chances of many BTSs converging on the same frequency in the event of the current 'yoohoo' frequency or channel ceasing to be available.

The 'yoohoo' message also includes a cyclic redundancy check (CRC) 214 comprising 16-bits to enable the receiving communication unit(s) to perform an error checking procedure on the received, recovered bits to assess whether they are meaningful or not.

The 'yoohoo' message further comprises a transmit and receive portion. In the preferred embodiment of the present invention of a DIIS wireless communication system, 25 msec is allocated for the transmit portion (blocks 191 to 216) and 35 msec allocated for the receive portion 218. This allows for the maximum turn-around-time from receive-to-transmit and vice versa of monitoring MSs in DIIS of 5 msec.

It should be noted that all BTSs are also listening 218 to their up-links in order to establish if one of their served MSs is requesting use of the frequencies/channel. This will occur during times when they are not transmitting 'yoohoo' bit map messages 198.

During the receive portion of the 'yoohoo' message, each BTS listens for possible messages from other BTS(s), requesting that all other BTS(s) leave the channel to allow a communication from, or to, one of its MSs to proceed. This 'Go' message 222 may be heard by other BTSs either in their own listen 218 intervals or those of other BTS(s).

Once a serving BTS receives a request from an MS to use the channel it needs to begin a dialogue with two parties, namely the requesting MS and the other BTS(s).

The priority from a 'good neighbour' point of view is to tell other BTSs that the channel is about to become busy. This is achieved by broadcasting a series of N 'Go' messages 222 to those BTSs and MSs able to listen, i.e. those not in stand-by mode.

The requesting MS observes that its serving BTS is asking other BTSs to leave the channel and therefore waits to be serviced. In some cases, sufficient capacity may be present within a 'Go' message 222 to allow simultaneous communication with the MS to continue, whilst the 'Go' message 222 signalling is in progress. Following this sequence of 'Go' messages 222 the BTS continues the dialogue with the MS.

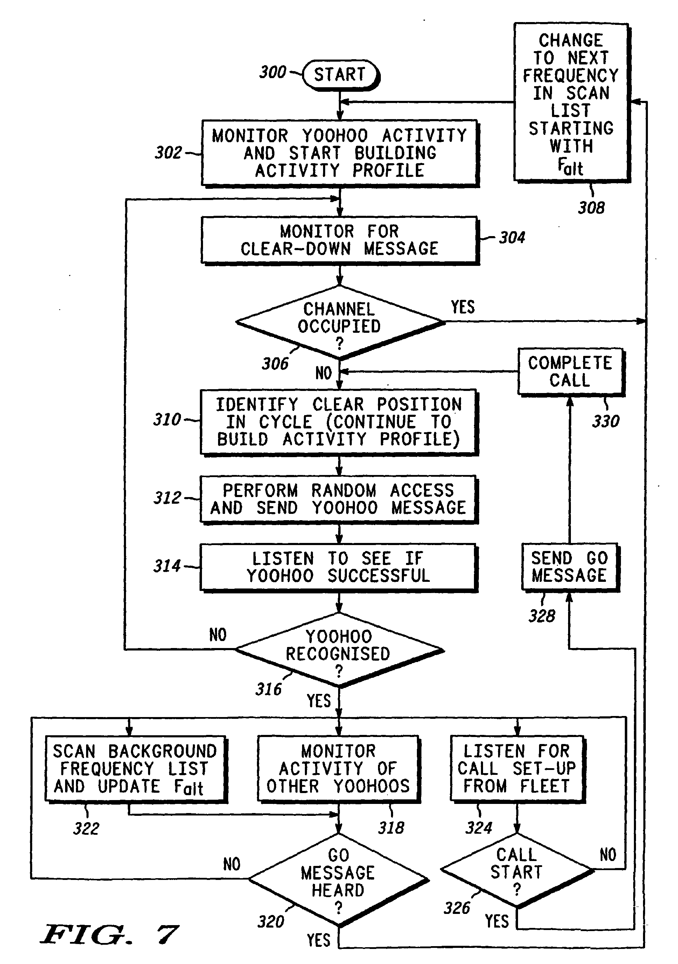

Turning now to FIG. 7, a flowchart of a self-organising channel allocation procedure of a BTS is shown, in accordance with the preferred embodiment of the invention.

The process starts at step 300, with the MS monitoring for 'yoohoo' message activity and starting to build a profile of the system communication activity, as shown in step 302. If the MS wishes to communicate on the system, it monitors the channel(s) for a clear-down message, as in step 304. If the channel is occupied, in step 306, the MS moves to the next frequency in the scan list, starting with Fₐₗₜ, as shown in step 308, and returns to the monitoring operation in step 302.

If the channel is not occupied, in step 306, the BTS identifies a clear position in the 'yoohoo' cycle and continues to build up the activity profile for that channel, as shown in step 310. As an additional benefit, the monitoring for the clear-down message also avoids the possibility that a call just to complete would result in a BTS moving to another frequency.

The BTS then performs a random access request and transmits a 'yoohoo' message identifying all of the other 'yoohoo' messages that the BTS can hear on that channel, as in step 312. The BTS then continues to listen to the channel, as in step 314, decoding the information in other BTS 'yoohoo' messages to determine whether its 'yoohoo' message was successfully received by other BTS(s).

If the BTS determines that its 'yoohoo' message was not received successfully by other BTS (s) in step 316, the BTS returns to the step of monitoring for a clear-down message, in step 304.

If the BTS determines that its 'yoohoo' message was received successfully by other BTS(s), in step 316, the BTS continues to monitor the activity of other 'yoohoo' message transmissions, as in step 318. This monitoring activity is continued until the BTS receives a "Go" message in step 320, informing the BTS to vacate this channel so that another BTS's communication can take place. Concurrently, the BTS scans the background frequency list and updates this list, including Fₐₗₜ, as shown in step 322.

Whilst monitoring activity on the channel, the BTS listens for call set-up information (either group or individual) from members of its fleet, as shown in step 324. Until it receives a "Go" message in step 320, or a call set-up message in step 326, the BTS continues to perform such listening, monitoring and list-updating processes.

If the BTS receives a call start request in step 326, the BTS sends a "Go" message to other BTSs that are transmitting 'yoohoo' messages on the channel, as shown in step 328. After the other BTSs have left the channel, the BTS initiates and continues with the call until it is finished, as in step 330. After completion of the call, the BTS returns to the process of monitoring messages on the next frequency of the scan list, as shown in step 310.

It will be understood that the aforementioned inventive concepts provide at least the following advantages:
(i) a procedure to allow several BTSs or repeaters to simultaneously share a single frequency, thereby enabling efficient use of the spectrum. This is achieved, in part, by each BTS/repeater transmitting and listening to the same frequency in a self-regulating time division duplex (TDD) manner;
(ii) a procedure for the BTSs to indicate to their respective fleets of MSs which frequency they are currently permitted to use, and as such need to monitor. This is achieved partly through the concept of a 'map' of other transmissions to allow access and coordination;
(iii) a procedure enabling collisions to be detected in such a self-organising system;
(iv) a procedure for resolving such collisions when they occur; and
(v) a new form of message, the 'yoohoo' message, to permit other BTSs to be made aware of the need to switch to a secondary frequency taking their respective MSs with them.

It is within the contemplation of the invention that the inventive concepts described herein are not limited to PMR communication systems, or TDD communication systems, but are applicable to any wireless communication system where a communication resource is shared.

Furthermore, it is within the contemplation of the invention that the inventive concepts described herein are not limited to sharing a frequency channel, but can be applied to sharing any form of communication channel or resource, such as a time-slot, time-frame, code sequence including time and frequency information, etc.

## Claims

1. A self-organising wireless communication system (10) comprising a plurality of wireless communication serving units (24-30) adapted to serve a plurality of mobile stations (12,16) by use of a limited communication resource (18-22) which is shared between the serving units, wherein at least one serving unit is adapted to monitor for availability of channels of the resource and includes a transmitter (114,122) adapted to transmit a wireless transmission message (190) indicating a given channel selected for communication with other communication units; **characterised in that** each of the serving units (24-30) is adapted (i) to monitor the availability of channels of the resource by scanning for available channels; (ii) to rank the available channels found; and (iii) periodically to transmit on a first selected available channel a wireless presence message (190) including (a) a portion (198) identifying whether transmission from other wireless communication serving units can be received by that serving unit; and (b) a portion (200) informing receiving communication units of selected channels alternative to the first channel to be used for communication by that serving unit if the first channel ceases to be available, wherein the selected alternative channels include a single favourite channel or frequency and a cyclically transmitted list of secondary channels or frequencies.

2. The self-organising wireless communication system according to claim 1, wherein each serving unit includes a receiver (106, 108) adapted to receive the wireless presence messages transmitted by other wireless communication serving units, said receiver being operably coupled to a processor (114) for processing said presence messages to determine which of the other serving units transmitted the presence messages.

3. The self-organising wireless communication system according to claim 1 or claim 2, wherein each of the serving units includes a receiver having or coupled to synchronising means (114) to synchronise said receiver to other serving units.

4. The self-organising wireless communication system according to claim 1, claim 2 or claim 3, wherein each serving unit is adapted to transmit the wireless presence message in a periodic cycle, and to listen initially to a full cycle of the wireless presence messages before transmitting its own wireless presence message.

5. The self-organising wireless communication system according to claim 4, further **characterised by** each of the serving units including selecting means (114) adapted to select a portion of said cycle to transmit its wireless presence message.

6. The self-organising wireless communication system according to any one of the preceding claims, wherein said wireless presence message includes a listening period for use by any one of the plurality of wireless communication serving units to instruct the other wireless communication serving units to leave the communication resource so that a communication can take place.

7. The self-organising wireless communication system according to any one of the preceding claims, wherein each of the wireless communication serving units is adapted to scan all available communication resources upon start-up.

8. The self-organising wireless communication system according to claim 7, wherein each wireless communication serving unit is adapted to organise said available communication resource into a ranked list of channels or frequencies according to a measured noise or interference level.

9. The self-organising wireless communication system according to any one of the preceding claims, wherein each serving unit is adapted to transmit the wireless presence message to include a bitmap indication (160-166) of other wireless presence messages that can be successfully received by the respective serving unit.

10. The self-organising wireless communication system according to claim 9, wherein said bitmap indication indicates an available time period or slot for transmission of each serving unit's presence message (170).

11. The self-organising wireless communication system according to claim 9 or claim 10, wherein each serving unit is adapted to monitor the bitmap indication of the presence messages of other wireless communication serving units to establish if the presence message of the serving unit has been successfully received by said other serving units.

12. The self-organising wireless communication system according to claim 11, wherein each serving unit is adapted, if it determines that its presence message has not been successfully received by all other serving units, to operate a majority vote mechanism to assess whether sufficient other serving units successfully received the presence transmission message.

13. The self-organising wireless communication system according to any one of the preceding claims, wherein the each serving unit is adapted to define at least one alternative frequency or channel using an absolute addressing scheme (202) or a relative addressing scheme (204).

14. The self-organising wireless communication system according to any one of the preceding claims , wherein each serving unit is adapted to perform a check to determine whether a number of other serving units are specifying the same alternative channel or frequency.

15. The self-organising wireless communication system according to any one of the preceding claims, wherein each serving unit is adapted to include in the presence message (320) a portion informing other communication units to vacate the current channel or frequency so that a call can take place on said current channel or frequency.

16. The self-organising wireless communication system according to any one of the preceding claims and wherein the units of the system are adapted to operate according to a FDMA protocol.

17. The self-organising wireless communication system according to claim 16 and wherein the units are adapted to operate according to the DIIS standard protocol.

18. A method of operation in a communication system according to any one of claims 1 to 17, the method comprising the steps of:
at least one serving unit (24-30) monitoring for availability channels of the resource shared in the system and transmitting a wireless message (190) including a portion (198) indicating a given channel selected for communication with other communication units; and **characterised by** each of the wireless communication serving units of the system (i) monitoring the availability of channels by scanning for available channels; (ii) ranking the available channels found; and (iii) periodically transmitting on a first selected available channel a wireless presence message including (a) a portion (198) identifying whether transmission from other wireless communication serving units can be received by that serving unit; and (b) a portion (200) informing receiving communication units of selected channels alternative to the first channel to be used for communication by that serving unit if the first channel ceases to be available, wherein the selected alternative channels include a single favourite channel or frequency and a cyclically transmitted list of secondary channels or frequencies.

19. A wireless communication unit adapted to be used in the system according to any one of claims 1 to 17 as one of the wireless communication serving units (24-30), the unit being adapted to monitor for availability of channels of the resource shared in the system and to transmit a wireless message (190) including a portion (198) indicating a given channel selected for communication with other communication units; and **characterised in that** the unit is adapted to (i) monitor the availability of channels by scanning for available channels; (ii) rank the available channels found; and (iii) periodically transmit on a first selected available channel a wireless presence message including (a) a portion (198) identifying whether transmission from other wireless communication serving units can be received by that unit as a serving unit; and (b) a portion (200) informing receiving communication units of selected channels alternative to the first channel to be used for communication by that serving unit if the first channel ceases to be available, wherein the selected alternative channels include a single favourite channel or frequency and a cyclically transmitted list of secondary channels or frequencies.

20. A unit according to claim 19 and which comprises a base transceiver unit or a fixed repeater unit.

## Patentansprüche

1. Selbstorganisierendes Drahtloskommunikationssystem (10) mit einer Vielzahl von Drahtloskommunikationsbedieneinheiten (24-30), die geeignet sind, unter Verwendung einer beschränkten Kommunikationsressource (18-22), die unter den Bedieneinheiten geteilt wird, eine Vielzahl von Mobilstationen (12, 16) zu bedienen, wobei mindestens eine Bedieneinheit geeignet ist, die Verfügbarkeit von Kanälen der Ressource zu überwachen, und einen Sender (114, 122) aufweist, der geeignet ist, eine Drahtlossendenachricht (190) auszusenden, die einen gegebenen zur Kommunikation mit anderen Kommunikationseinheiten ausgewählten Kanal angibt; **dadurch gekennzeichnet, dass** jede der Bedieneinheiten (24-30) geeignet ist, (i) die Verfügbarkeit von Kanälen der Ressource durch Scannen nach verfügbaren Kanälen zu überwachen; (ii) eine Rangordnung der gefundenen verfügbaren Kanäle zu erstellen; und (iii) periodisch auf einem ersten ausgewählten verfügbaren Kanal eine Drahtlosanwesenheitsnachricht (190) auszusenden, die (a) einen Abschnitt (198) aufweist, der angibt, ob Sendungen anderer Drahtloskommunikationsbedieneinheiten von der Bedieneinheit empfangen werden können; und (b) einen Abschnitt (200), der empfangende Kommunikationseinheiten darüber informiert, dass ausgewählte Kanäle, die Alternativen zu dem ersten Kanal darstellen, zur Kommunikation von der Bedieneinheit verwendet werden sollen, wenn der erste Kanal aufhört, verfügbar zu sein, wobei die ausgewählten alternativen Kanäle einen einzigen Favoritkanal oder eine einzige Favoritfrequenz sowie eine zyklisch ausgesandte Liste von Zweitkanälen oder Zweitfrequenzen umfassen.

2. Selbstorganisierendes Drahtloskommunikationssystem gemäß Anspruch 1, wobei jede Bedieneinheit einen Empfänger (106, 108) aufweist, der geeignet ist, die von anderen Drahtloskommunikationsbedieneinheiten ausgesandten Drahtlosanwesenheitsnachrichten zu empfangen, wobei der Empfänger mit einem Prozessor (114) zum Verarbeiten der Anwesenheitsnachrichten funktionell verbunden ist, um zu bestimmen, welche der anderen Bedieneinheiten die Anwesenheitsnachrichten aussandte.

3. Selbstorganisierendes Drahtloskommunikationssystem gemäß Anspruch 1 oder Anspruch 2, wobei jede der Bedieneinheiten einen Empfänger aufweist, der Synchronisierungsmittel (114) aufweist oder mit solchen verbunden ist, um den Empfänger mit anderen Bedieneinheiten zu synchronisieren.

4. Selbstorganisierendes Drahtloskommunikationssystem gemäß Anspruch 1, Anspruch 2 oder Anspruch 3, wobei jede Bedieneinheit geeignet ist, die Drahtlosanwesenheitsnachricht in einem periodischen Zyklus auszusenden und anfänglich einen vollen Zyklus der Drahtlosanwesenheitsnachrichten anzuhören, bevor sie ihre eigene Drahtlosanwesenheitsnachricht aussendet.

5. Selbstorganisierendes Drahtloskommunikationssystem gemäß Anspruch 4, weiter **dadurch gekennzeichnet, dass** jede der Bedieneinheiten Auswahlmittel (114) aufweist, die geeignet sind, einen Abschnitt des Zyklus auszuwählen, um ihre Drahtlosanwesenheitsnachricht auszusenden.

6. Selbstorganisierendes Drahtloskommunikationssystem gemäß einem beliebigen der vorhergehenden Ansprüche, wobei die Drahtlosanwesenheitsnachricht eine Zuhörperiode aufweist, die von jeder beliebigen Drahtloskommunikationseinheit aus der Vielzahl von Drahtloskommunikationseinheiten verwendet werden kann, um die anderen Drahtloskommunikationsbedieneinheiten anzuweisen, die Kommunikationsressource zu verlassen, so dass eine Kommunikation stattfinden kann.

7. Selbstorganisierendes Drahtloskommunikationssystem gemäß einem beliebigen der vorhergehenden Ansprüche, wobei jede der Drahtloskommunikationsbedieneinheiten geeignet ist, nach der Inbetriebsetzung alle verfügbaren Kommunikationsressourcen zu scannen.

8. Selbstorganisierendes Drahtloskommunikationssystem gemäß Anspruch 7, wobei jede Drahtloskommunikationsbedieneinheit geeignet ist, die verfügbare Kommunikationsressource in eine Rangliste von Kanälen oder Frequenzen gemäß einem gemessenen Rausch- oder Interferenzpegel zu gliedern.

9. Selbstorganisierendes Drahtloskommunikationssystem gemäß einem beliebigen der vorhergehenden Ansprüche, wobei jede Bedieneinheit geeignet ist, die Drahtlosanwesenheitsnachricht auszusenden, um eine Bitmap-Anzeige (160-166) anderer Drahtlosanwesenheitsnachrichten, die von der jeweiligen Bedieneinheit erfolgreich empfangen werden können, einzuschließen.

10. Selbstorganisierendes Drahtloskommunikationssystem gemäß Anspruch 9, wobei die Bitmap-Anzeige eine verfügbare Zeitdauer oder einen verfügbaren Slot zur Aussendung der Anwesenheitsnachricht (170) einer jeden Bedieneinheit anzeigt.

11. Selbstorganisierendes Drahtloskommunikationssystem gemäß Anspruch 9 oder Anspruch 10, wobei jede Bedieneinheit geeignet ist, die Bitmap-Anzeige der Anwesenheitsnachrichten anderer Drahtloskommunikationsbedieneinheiten zu überwachen, um festzustellen, ob die Anwesenheitsnachricht der Bedieneinheit von den anderen Bedieneinheiten erfolgreich empfangen worden ist.

12. Selbstorganisierendes Drahtloskommunikationssystem gemäß Anspruch 11, wobei jede Bedieneinheit geeignet ist, einen Mehrheitsabstimmmechanismus zu betreiben, um zu beurteilen, ob genügend andere Bedieneinheiten die Anwesenheitssendenachricht erfolgreich empfingen.

13. Selbstorganisierendes Drahtloskommunikationssystem gemäß einem beliebigen der vorhergehenden Ansprüche, wobei die jede Bedieneinheit geeignet ist, unter Verwendung eines absoluten Adressschemas (202) oder eines relativen Adressschemas (204) mindestens eine alternative Frequenz oder mindestens einen alternativen Kanal zu definieren.

14. Selbstorganisierendes Drahtloskommunikationssystem gemäß einem beliebigen der vorhergehenden Ansprüche, wobei jede Bedieneinheit geeignet ist, eine Überprüfung durchzuführen, um zu bestimmen, ob eine Anzahl anderer Bedieneinheiten denselben alternativen Kanal oder dieselbe alternative Frequenz angeben.

15. Selbstorganisierendes Drahtloskommunikationssystem gemäß einem beliebigen der vorhergehenden Ansprüche, wobei jede Bedieneinheit geeignet ist, in die Anwesenheitsnachricht (320) einen Abschnitt aufzunehmen, der andere Kommunikationseinheiten unterrichtet, den aktuellen Kanal oder die aktuelle Frequenz freizugeben, so dass ein Anruf auf dem aktuellen Kanal oder der aktuellen Frequenz stattfinden kann.

16. Selbstorganisierendes Drahtloskommunikationssystem gemäß einem beliebigen der vorhergehenden Ansprüche, wobei die Einheiten des Systems geeignet sind, gemäß einem FDMA-Protokoll betrieben zu werden.

17. Selbstorganisierendes Drahtloskommunikationssystem gemäß Anspruch 16, wobei die Einheiten geeignet sind, gemäß dem DIIS-Norm-Protokoll betrieben zu werden.

18. Betriebsverfahren in einem Kommunikationssystem gemäß einem beliebigen der Ansprüche 1 bis 17, mit den folgenden Schritten:
mindestens eine Bedieneinheit (14-30) überwacht die Verfügbarkeit von Kanälen der in dem System geteilten Ressource und sendet eine Drahtlosnachricht (190) aus, die einen Abschnitt (198) aufweist, der einen gegebenen für die Kommunikation mit anderen Kommunikationseinheiten ausgewählten Kanal angibt; und **dadurch gekennzeichnet, dass** jede der Drahtloskommunikationsbedieneinheiten des Systems (i) die Verfügbarkeit von Kanälen durch Scannen nach verfügbaren Kanälen überwacht; (ii) eine Rangordnung der gefundenen verfügbaren Kanäle erstellt; und (iii) periodisch auf einem ersten ausgewählten verfügbaren Kanal eine Drahtlosanwesenheitsnachricht aussendet, die (a) einen Abschnitt (198) aufweist, der angibt, ob Sendungen anderer Drahtloskommunikationsbedieneinheiten von der Bedieneinheit empfangen werden können; und (b) einen Abschnitt (200), der empfangende Kommunikationseinheiten informiert, dass ausgewählte Kanäle, die Alternativen zu dem ersten Kanal darstellen, von der Bedieneinheit zur Kommunikation verwendet werden sollen, wenn der erste Kanal aufhört, verfügbar zu sein, wobei die ausgewählten alternativen Kanäle einen einzigen Favoritkanal oder eine einzige Favoritfrequenz sowie eine zyklisch ausgesandte Liste von Zweitkanälen oder Zweitfrequenzen umfassen.

19. Drahtloskommunikationseinheit, die zur Verwendung als eine der Drahtloskommunikationsbedieneinheiten (24-30) in dem System gemäß einem beliebigen der Ansprüche 1 bis 17 geeignet ist, wobei die Einheit geeignet ist, die Verfügbarkeit von Kanälen der in dem System geteilten Ressource zu überwachen und eine Drahtlosnachricht (190) auszusenden, die einen Abschnitt (198) aufweist, der einen gegebenen für die Kommunikation mit anderen Kommunikationseinheiten ausgewählten Kanal angibt; und **dadurch gekennzeichnet, dass** die Einheit geeignet ist, (i) die Verfügbarkeit von Kanälen durch Scannen nach verfügbaren Kanälen zu überwachen; (ii) eine Rangordnung der gefundenen verfügbaren Kanäle zu erstellen; und (iii) periodisch auf einem ersten ausgewählten verfügbaren Kanal eine Drahtlosanwesenheitsnachricht auszusenden, die (a) einen Abschnitt (198) aufweist, der angibt, ob Sendungen anderer Drahtloskommunikationsbedieneinheiten von der Einheit als eine Bedieneinheit empfangen werden können; und (b) einen Abschnitt (200), der empfangende Kommunikationseinheiten informiert, dass ausgewählte Kanäle, die Alternativen zu dem ersten Kanal darstellen, von der Bedieneinheit zur Kommunikation verwendet werden sollen, wenn der erste Kanal aufhört, verfügbar zu sein, wobei der ausgewählte alternative Kanal einen einzigen Favoritkanal oder eine einzige Favoritfrequenz sowie eine zyklisch ausgesandte Liste von Zweitkanälen oder Zweitfrequenzen aufweist.

20. Einheit gemäß Anspruch 19, die eine Basistransceivereinheit oder eine feste Repeatereinheit aufweist.

## Revendications

1. Système de communication sans fil auto-organisateur (10) comprenant une pluralité d'unités de desserte de communication sans fil (24 - 30) adaptées pour desservir une pluralité de stations mobiles (12, 16) en utilisant une ressource de communication limitée (18 - 22) qui est partagée entre les unités de desserte, au moins une unité de desserte étant adaptée pour surveiller la disponibilité des canaux de la ressource et comprenant un émetteur (114, 122) adapté pour transmettre un message de transmission sans fil (190) indiquant un canal donné sélectionné pour les communications avec d'autres unités de communication ; **caractérisé en ce que** chacune des unités de desserte (24 - 30) est adaptée pour (i) surveiller la disponibilité des canaux de la ressource en effectuant une exploration à la recherche des canaux disponibles ; (ii) classer les canaux disponibles trouvés ; et (iii) transmettre périodiquement, sur un premier canal disponible sélectionné, un message de présence sans fil (190) incluant (a) une partie (198) identifiant si une transmission émanant d'autres unités de desserte de communication sans fil peut ou non être reçue par cette unité de desserte ; et (b) une partie (200) informant les unités de communication réceptrices des canaux sélectionnés, autres que le premier canal, qui doivent être utilisés pour une communication par cette unité de desserte si le premier canal cesse d'être disponible, les autres canaux sélectionnés comprenant un seul canal favori ou une seule fréquence favorite et une liste, transmise de façon cyclique, de canaux ou fréquences secondaires.

2. Système de communication sans fil auto-organisateur selon la revendication 1, dans lequel chaque unité de desserte comprend un récepteur (106, 108) adapté pour recevoir les messages de présence sans fil transmis par d'autres unités de desserte de communication sans fil, ledit récepteur étant fonctionnellement couplé à un processeur (114) pour le traitement desdits messages de présence afin de déterminer celles des autres unités de dessertes qui ont transmis les messages de présence.

3. Système de communication sans fil auto-organisateur selon la revendication 1 ou la revendication 2, dans lequel chacune des unités de desserte comprend un récepteur comprenant ou étant couplé à des moyens de synchronisation (114) pour la synchronisation dudit récepteur aux autres unités de desserte.

4. Système de communication sans fil auto-organisateur selon la revendication 1, la revendication 2 ou la revendication 3, dans lequel chaque unité de desserte est adaptée pour transmettre le message de présence sans fil selon un cycle périodique, et pour écouter initialement un cycle complet des messages de présence sans fil avant de transmettre son propre message de présence sans fil.

5. Système de communication sans fil auto-organisateur selon la revendication 4, **caractérisé, en outre, en ce que** chacune des unités de desserte comprend des moyens de sélection (114) adaptés pour sélectionner une partie dudit cycle pour transmettre son message de présence sans fil.

6. Système de communication sans fil auto-organisateur selon l'une quelconque des revendications précédentes, dans lequel ledit message de présence sans fil comprend une période d'écoute destinée à être utilisée par l'une quelconque de la pluralité d'unités de desserte de communication sans fil pour donner aux autres unités de desserte de communication sans fil l'instruction de quitter la ressource de communication de façon qu'une communication puisse avoir lieu.

7. Système de communication sans fil auto-organisateur selon l'une quelconque des revendications précédentes, dans lequel chacune desdites unités de desserte de communication sans fil est adaptée pour explorer toutes les ressources de communication disponibles au démarrage.

8. Système de communication sans fil auto-organisateur selon la revendication 7, dans lequel chaque unité de desserte de communication sans fil est adaptée pour organiser ladite ressource de communication disponible en une liste de canaux ou fréquences ordonnés selon un niveau de bruit ou d'interférence mesuré.

9. Système de communication sans fil auto-organisateur selon l'une quelconque des revendications précédentes, dans lequel chaque unité de desserte est adaptée pour transmettre le message de présence sans fil pour inclure une indication binaire (160 - 166) des autres messages de présence sans fil qui peuvent être reçus avec succès par l'unité de desserte respective.

10. Système de communication sans fil auto-organisateur selon la revendication 9, dans lequel ladite indication binaire indique un intervalle ou tranche de temps disponible pour la transmission du message de présence (170) de chaque unité de desserte.

11. Système de communication sans fil auto-organisateur selon la revendication 9 ou la revendication 10, dans lequel chaque unité de desserte est adaptée pour surveiller l'indication binaire des messages de présence des autres unités de desserte de communication sans fil pour établir si le message de présence de l'unité de desserte a été reçu avec succès par lesdites autres unités de desserte.

12. Système de communication sans fil auto-organisateur selon la revendication 11, dans lequel chaque unité de desserte est adaptée pour mettre en oeuvre, si elle détermine que son message de présence n'a pas été reçu avec succès par toutes les autres unités de desserte, un mécanisme de vote à la majorité pour évaluer si un nombre suffisant d'autres unités de desserte a reçu avec succès le message de transmission de présence.

13. Système de communication sans fil auto-organisateur selon l'une quelconque des revendications précédentes, dans lequel chaque unité de desserte est adaptée pour définir au moins un autre canal ou une autre fréquence en utilisant un schéma d'adressage absolu (202) ou un schéma d'adressage relatif (204).

14. Système de communication sans fil auto-organisateur selon l'une quelconque des revendications précédentes, dans lequel chaque unité de desserte est adaptée pour effectuer une vérification afin de déterminer si plusieurs des autres unités de desserte spécifient le même autre canal ou la même autre fréquence.

15. Système de communication sans fil auto-organisateur selon l'une quelconque des revendications précédentes, dans lequel chaque unité de desserte est adaptée pour inclure dans le message de présence (320) une partie informant les autres unités de communication de quitter le canal ou la fréquence en cours de façon qu'un appel puisse avoir lieu sur ledit canal ou ladite fréquence en cours.

16. Système de communication sans fil auto-organisateur selon l'une quelconque des revendications précédentes, et dans lequel les unités du système sont adaptées pour fonctionner selon un protocole FDMA.

17. Système de communication sans fil auto-organisateur selon la revendication 16, et dans lequel les unités sont adaptées pour fonctionner selon le protocole DIIS standard.

18. Procédé d'exploitation d'un système de communication selon l'une quelconque des revendications 1 à 17, le procédé comprenant les étapes selon lesquelles :
au moins une unité de desserte (24 - 30) surveillant la disponibilité des canaux de la ressource partagée dans le système et transmettant un message sans fil (190) incluant une partie (198) indiquant un canal donné sélectionné pour les communications avec d'autres unités de communication ; et **caractérisé en ce que** chacune des unités de desserte de communication sans fil du système (i) surveille la disponibilité des canaux en effectuant une exploration à la recherche des canaux disponibles ; (ii) classe les canaux disponibles trouvés ; et (iii) transmet périodiquement, sur un premier canal disponible sélectionné, un message de présence sans fil incluant (a) une partie (198) identifiant si une transmission émanant d'autres unités de desserte de communication sans fil peut ou non être reçue par cette unité de desserte ; et (b) une partie (200) informant les unités de communication réceptrices des canaux sélectionnés, autres que le premier canal, qui doivent être utilisés pour une communication par cette unité de desserte si le premier canal cesse d'être disponible, les autres canaux sélectionnés comprenant un seul canal favori ou une seule fréquence favorite et une liste, transmise de façon cyclique, de canaux ou fréquences secondaires.

19. Unité de communication sans fil adaptée pour être utilisée dans le système selon l'une quelconque des revendications 1 à 17 en tant l'une des unités de desserte de communication sans fil (24 - 30), l'unité étant adaptée pour surveiller la disponibilité des canaux de la ressource partagée dans le système et pour transmettre un message sans fil (190) incluant une partie (198) indiquant un canal donné sélectionné pour les communications avec d'autres unités de communication ; et **caractérisée en ce que** l'unité est adaptée pour (i) surveiller la disponibilité des canaux en effectuant une exploration à la recherche des canaux disponibles ; (ii) classer les canaux disponibles trouvés ; et (iii) transmettre périodiquement, sur un premier canal disponible sélectionné, un message de présence sans fil incluant (a) une partie (198) identifiant si une transmission émanant d'autres unités de desserte de communication sans fil peut ou non être reçue par cette unité en tant qu'unité de desserte ; et (b) une partie (200) informant les unités de communication réceptrices des canaux sélectionnés, autres que le premier canal, qui doivent être utilisés pour une communication par cette unité de desserte si le premier canal cesse d'être disponible, les autres canaux sélectionnés comprenant un seul canal favori ou une seule fréquence favorite et une liste, transmise de façon cyclique, de canaux ou fréquences secondaires.

20. Unité selon la revendication 19, et qui comprend une unité formant émetteur-récepteur de base ou une unité formant répéteur fixe.
